# EUROPEAN PATENT APPLICATION

(11) **EP 3 413 377 A1**
(43) Date of publication of application: **12.12.2018**
(21) Application number: 17175197.7
(22) Date of filing: 09.06.2017
(51) Int. Cl.: H01M 2/16, H01M 2/34, H01M 10/42

(54) **BATTERY CELL AND METHOD FOR OPERATING A BATTERY CELL**

(71) Applicant: Lithium Energy and Power GmbH & Co. KG, 70469 Stuttgart (DE)
(72) Inventor: Wurm, Calin Iulius, 86405 Meitingen (DE); Hiller, Martin Manuel, 70469 Stuttgart (DE)
(74) Representative: Bee, Joachim

(57) **Abstract**

The invention concerns a battery cell (2), comprising at least one electrode assembly (10), the electrode assembly (10) containing an anode (11) and a cathode (12) that are separated from one another by means of a separator (18), the separator (18) containing a base layer that is coated with a coating made of a polymer material. The battery cell (2) further comprises an electrical load (42) for discharging the battery cell (2) that is electrically connectable to the anode (11) and to the cathode (12). The invention concerns a method for operating a battery cell (2) according to the invention, whereat after detection of an error condition, the electrical load (42) is electrically connected to the anode (11) and to the cathode (12) such that a discharging current is flowing through the battery cell (2), whereby the coating is melting.

## Description

The invention relates to a battery cell comprising at least one electrode assembly, whereat the electrode assembly contains an anode and a cathode that are separated from one another by means of a separator, whereat the separator contains a base layer that is coated with a coating made of a polymer material. The invention also relates to a method for operating a battery cell according to the invention.

### State of the Art

Electrical energy can be stored by means of batteries. Batteries convert chemical energy into electrical energy. Particularly, rechargeable batteries are known to be able to be charged and discharged several times. Batteries or battery systems comprise several battery cells that are connected electrically in series or in parallel.

Especially, lithium ion battery cells are used in rechargeable batteries or battery systems. Lithium ion battery cells have a relatively high energy density. Lithium ion battery cells are used for instance in motor vehicles, in particular in electric vehicles (EV), in hybrid electric vehicles (HEV) and in plug-in hybrid vehicles (PHEV). Lithium ion battery cells may comprise one or more electrode assemblies.

Electrode assemblies have a positive electrode called cathode and a negative electrode called anode. The anode and the cathode are separated from one another by means of a separator. The electrodes of the battery cell are formed like foils and are wound with interposition of the separator to form an electrode roll, also referred to as jelly-roll. Alternatively, the electrodes can be layered to form an electrode stack.

The electrodes and the separator are impregnated by an electrolyte that is normally in liquid state, gel state or in solid state. The electrodes of the electrode assemblies are connected to the terminals of the battery cell. The battery cell can be charged and discharged via the terminals.

Both, the cathode and the anode, comprise a current collector on which a composite material containing an active material, a binder and/or a conductive agent, e.g. carbon black, is applied. The current collector of the cathode is typically made of aluminium and the current collector of the anode is typically made of copper. The composite material for the cathode contains, for example, a metal oxide. The composite material for the anode contains, for example, graphite or silicon. In the active material of the anode lithium ions are intercalated.

In a charging process of the battery cell, lithium ions are migrating from the cathode to the anode through the separator while simultaneously electrons flow in an external circuit from the cathode to the anode. In a discharge process, the lithium ions move within the battery cell from the anode to the cathode and electrons flow in the external circuit from the anode to the cathode.

If the battery cell is brought outside normal conditions, in particular too high temperature, too low temperature, short circuit, overcharge, charging after deep discharge, the inner temperature of the battery cell can excessively rise. If the temperature in the battery cell is sufficiently high, a thermal runaway may occur, which may destroy the battery cell.

Document CN 104600233 discloses a thermal shutdown composite diaphragm for a lithium ion battery that consists of a nonwoven fabric base material with a melting point of 150 to 350 °C and a coating which is smeared on the surface of the nonwoven fabric base material. The coating includes a polymer, a binder and a solvent, whereat the melting point of the polymer is 80 to 170 °C.

Document CN 104205417 discloses a laminated porous film which is suitable as a separator for an electrical energy storage device. The laminated porous film is provided with a porous layer on at least one surface of a substrate.

Document US 2011/0256443 discloses a separator for use in a high-capacity electrochemical device. The separator includes a planar non-woven fabric substrate having a plurality of pores, and a porous coating layer formed on at least one surface of the non-woven fabric substrate. The porous coating layer is composed of a mixture of filler particles and a binder polymer. The filler particles include conductive positive temperature coefficient (PTC) particles composed of a mixture of conductive particles and a low melting point resin having a melting point lower than that of the non-woven fabric substrate. Due to the presence of the conductive PTC particles, the porous coating layer can be imparted with a shutdown function against thermal runaway.

The article "Temperature-responsive microspheres-coated separator for thermal shutdown protection of lithium ion batteries" from the journal of The Royal Society of Chemistry 2015, pages 172 to 176, discloses a separator coated with microspheres.

### Disclosure of the Invention

A battery cell is proposed that comprises at least one electrode assembly. The electrode assembly contains an anode and a cathode that are separated from one another by means of a separator. The separator contains a base layer that is coated with a coating made of a polymer material. The base layer and the coating are porous having pores such that lithium ions can pass through when a liquid electrolyte is present.

According to the invention, the battery cell further comprises an electrical load for discharging the battery cell that is electrically connectable to the anode and to the cathode. The electrical load is for example an ohmic resistor that is arranged electrically in series with a switch. The switch is in particular a transistor that is controllable by a control device.

When the battery cell is brought outside normal conditions, the electrical load can be electrically connected to the anode and to the cathode by closing the switch. Hence, a discharging current is flowing through the battery cell, whereby temperature within the battery cell is rising and the coating is melting and blending over the base layer. Thereby, the coating is plugging pores within the base layer. Hence, the ion conductivity of the base layer is lost. Thus, the separator lacks ion conductivity and ion flow within the electrode assembly is stopped. Hence, the battery cell is shut down.

The switch can for example be a fast discharging device or a bridging element as described in document EP 2 642 582 B1. When said fast discharging device or a bridging element is activated, an internal insulation layer disintegrates and hence an electrical connection originates connecting the electrical load electrically to the anode and to the cathode.

The base layer is in particular made of a non-woven polyimide which is stable up to 250 °C. The base layer can also be made of other materials, for example polypropylene. Essentially, the melting point of the polymer material of the coating must be lower than the melting point or the point of disaggregation of the base layer.

Preferably, the polymer material of the coating has a melting point between 80 °C and 200 °C, in particular between 80 °C and 130 °C. Hence, the coating is melting and the battery cell is shut down while the mechanical integrity of the battery cell is still maintained and before the base layer is melted or disaggregated by heat.

According to an advantageous embodiment of the invention, the polymer material of the coating is made of an alkane. Inter alia, alkanes that comprise molecules with more than 35 carbon atoms and ethylene vinyl acetate copolymers can be used. But also other polymers, in particular copolymers, that melt between 80 °C and the melting point or the point of disaggregation of the base layer can be used. Examples for such copolymers comprise ethylene and butyl acrylate, polyethylene oxide or polycaprolacton which has a melting point of about 58 °C or mixtures of these polymers.

According to an advantageous embodiment of the invention, the coating comprises microspheres that are placed abreast and about each other. Hence, pores are formed between the microspheres that ensure ion conductivity of the coating and hence of the separator.

According to a further advantageous embodiment of the invention, the coating comprises a binder to keep material on the separator. In particular, the coating comprises microspheres and a binder.

According to a further development of the invention, the separator further contains an additional layer made of a ceramic material. Said additional layer increases electrochemical stability and thermal stability of the separator and of the battery cell.

According to a further development of the invention, the cathode contains an additional layer made of a ceramic material facing the separator. Thereat, said additional layer may include a binder. Said additional layer increases electrochemical stability and thermal stability of the separator and of the battery cell.

According to an advantageous embodiment of the invention, the coating is arranged between the base layer and the additional layer.

According to another advantageous embodiment of the invention, the base layer is arranged between the additional layer and the coating.

According to an advantageous embodiment of the invention, the separator is arranged within the electrode assembly such that the coating is facing the cathode.

According to another advantageous embodiment of the invention, the separator is arranged within the electrode assembly such that the coating is facing the anode.

Also, a method for operating a battery cell according to the invention is proposed. Thereat, after detection of an error condition, in particular when the battery cell is brought outside normal conditions, the electrical load is electrically connected to the anode and to the cathode such that a discharging current is flowing through the battery cell. Thereby, temperature within the battery cell is rising and the coating is melting.

Such an error condition is in particular detected by a battery management system which includes several software algorithms that detect errors by processing signals from sensors.

Thereby, the coating is blending over the base layer of the separator and plugging the pores within the base layer. Hence, the ion conductivity of the base layer is lost. Thus, the separator lacks ion conductivity and ion flow within the electrode assembly through the separator is stopped. Hence, the battery cell is shut down.

Preferably, the electrical load is connected to the anode and to the cathode by closing a switch that is arranged electrically in series with the electrical load. In particular, several sensors are provided that detect temperature, voltage, pressure, mechanical impact, current and/or moisture. The sensors transmit respective data to a control device which comprises means for evaluation of transmitted date. The switch is controllable by the control device.

If the control devices calculates an error condition, the control devices closes the switch. Hence, the electrical load is electrically connected to the anode and to the cathode and the discharging current is flowing through the battery cell causing temperature to rise and the coating to melt.

The battery cell may have a separate control device. It is also feasible, that several battery cells are connected to one common control device and that said control device can close the switches of several battery cells and hence can shut down several battery cells.

Thus, the coating is plugging pores within the base layer. Hence, the ion conductivity of the base layer is lost. Thus, the separator lacks ion conductivity and ion flow within the electrode assembly is stopped. Hence, the battery cell is shut down.

A battery cell according to the invention as well as the method according to the invention are usage advantageously in particular in an electric vehicle (EV), in a hybrid electric vehicle (HEV), in a plug-in hybrid vehicle (PHEV), in a stationary battery or in a battery in a marine application.

### Advantages of the Invention

Within a battery cell according to the invention, in particular by using the method for operating the battery cell according to the invention, ion flow can be stopped early enough to avoid thermal runaway in the battery cell. In particular, the cell can be shut down before the separator is disaggregated and hence an electrical contact between the anode and the cathode is prevented. Hence, thermal runaway as well as destruction, in particular explosion, of the battery cell can be prevented.

Thereat, shut down of the battery cell is controllable by a control device which receives information from several sensors. Such sensors inter alia transmit data about current or temperature to the control device. Hence, the control device is able to calculate adequate conditions which can be regarded as serious and which justify a shutdown of the battery cell. By adequate choice of materials for the base layer and for the coating, a temperature range can be defined within which a shutdown of the battery cell can be triggered. By adequate choice of the electrical load, the size of the discharging current is adjustable. The size of the discharging current defines the speed of temperature rise within the battery cell and hence affects the time delay until the coating is melting.

### Brief Description of the Drawings

For a better understanding of the aforementioned embodiments of the invention as well as additional embodiments thereof, reference should be made to the description of embodiments below, in conjunction with the appended drawings showing:
- Figure 1: a schematic view at a battery cell,
- Figure 2: a schematic view at an electrode assembly of the battery cell shown in figure 1 according to a first embodiment and
- Figure 3: a schematic view at an electrode assembly of the battery cell shown in figure 1 according to a second embodiment.

Hereinafter, preferred embodiments of the present invention will be described with reference to the drawings. The drawings only provide schematic views of the invention. Like reference numerals refer to corresponding parts, elements or components throughout the figures, unless indicated otherwise.

### Description of Embodiments

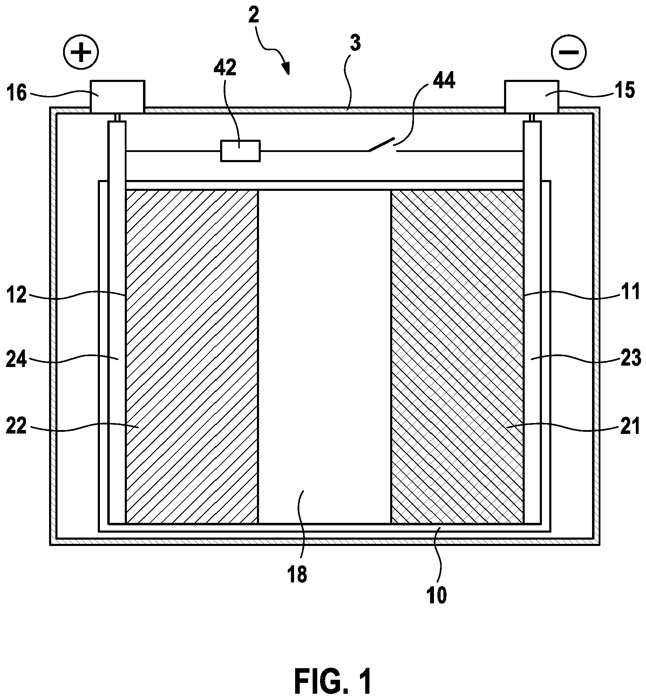

Figure 1 shows a schematic view at a battery cell 2. The battery cell 2 contains a housing 3 which has, for example, a prismatic shape, a cylindrical shape or a combination of both. The battery cell 2 further contains an electrode assembly 10, which is arranged within the housing 3.

The electrode assembly 10 contains an anode 11, a cathode 12 and a separator 18 that is arranged between the anode 11 and the cathode 12. Furthermore, the battery cell 2 contains a negative terminal 15 and a positive terminal 16. The terminals 15, 16 serve for charging and discharging the battery cell 2 and are mounted on the housing 3.

Presently, the electrode assembly 10 is shaped as a jelly roll. That means the anode 11 and the cathode 12 of the electrode assembly 10 are flat foils or sheets that are wound about an axis. The separator 18 that is also a flat foil is wound between the anode 11 and the cathode 12 about the same axis.

The housing 3 is filled with a liquid electrolyte such that the electrode assembly 10 is impregnated by the electrolyte. The separator 18, respectively parts of the separator 18, is soaked in said liquid electrolyte. The electrolyte is ion conductive.

The electrode assembly 10 can also be of pouch type, for example. That means the anode 11 and the cathode 12 of the electrode assembly 10 consist of several flat foils that are stacked alternately to form a pile or a stack. The separator 18 also consists of several flat foils that are stacked between the foils of the anode 11 and the foils of the cathode 12. A bag or a pouch made of an electrically insulating material surrounds the electrode assembly 10 such that the electrode assembly 10 is electrically insulated. Such a stack can also be inserted into a prismatic housing 3.

The anode 11 contains an anode composite material 21 formed as a flat sheet and an anode current collector 23 formed as a flat foil. The anode composite material 21 and the anode current collector 23 are attached to one another. The anode current collector 23 is electrically conductive and is made of a metal, in particular of copper. The anode current collector 23 is electrically connected to the negative terminal 15 of the battery cell 2.

The cathode 12 contains a cathode composite material 22 formed as a flat foil and a cathode current collector 24 formed as a flat foil. The cathode composite material 22 and the cathode current collector 24 are attached to one another. The cathode current collector 24 is electrically conductive and is made of a metal, in particular of aluminium. The cathode current collector 24 is electrically connected to the positive terminal 16 of the battery cell 2.

The battery cell 2 further contains an electrical load 42 which serves for discharging the battery cell 2 in case of an error condition. The electrical load 42 is an ohmic resistor that is arranged within the housing 3 of the battery cell 2. The ohmic resistor has for example a resistance between 0.1 µΩ and 1 Ω, in particular between 1 µΩ and 10 mΩ, especially between 10 µΩ and 1 mΩ.

The electrical load 42 is arranged electrically in series with a switch 44 which is also arranged within the housing 3. The switch 44 is a transistor that is controllable by an external control device which is not shown here. Alternatively, the switch 44 can be a fast discharging device or a bridging element as described in document EP 2 642 582 B1.

The electrical load as well as the switch 44 could also be arranged outside the housing 3. However, it the electrical load 42 is arranged inside the housing 3, heat produced in the electrical load 42 while discharging also heats up the battery cell 2 and hence speeds up the melting of the coating 34.

The electrical load 42 and the switch 44 are arranged electrically between the anode current collector 23 and the cathode current collector 24. When the switch 44 is closed, the electrical load 42 is electrically connected to the anode current collector 23 and to the cathode current collector 24. Hence, the electrical load 42 is electrically connected to the anode 11 and to the cathode 12 causing a discharging current to flow.

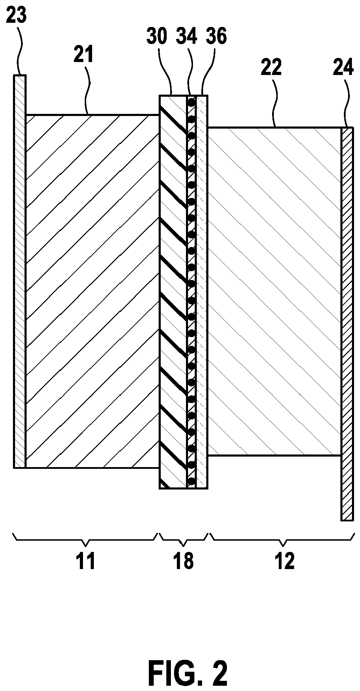

Figure 2 shows a schematic and detailed view at the electrode assembly 10 of the battery cell 2 shown in figure 1 according to a first embodiment. The separator 18 of the electrode assembly 10 contains a base layer 30, a coating 34 and an additional layer 36.

Thereat, the base layer 30 is presently made of a non-woven polyimide. The additional layer 36 is presently made of a ceramic material. The coating 34 is presently made of a polymer material, in particular of an alkane, and comprises microspheres. The microspheres have for example diameters between 5 µm and 100 nm, in particular between 10 µm and 100 nm, especially between 20 µm and 10 nm.

The separator 18 of the electrode assembly 10 is constructed such that the coating 34 is arranged between the base layer 30 and the additional layer 36. The separator 18 is arranged within the electrode assembly 10 such that the base layer 30 is facing the anode composite material 21, respectively the anode 11, and that the additional layer 36 is facing the cathode composite material 22, respectively the cathode 12.

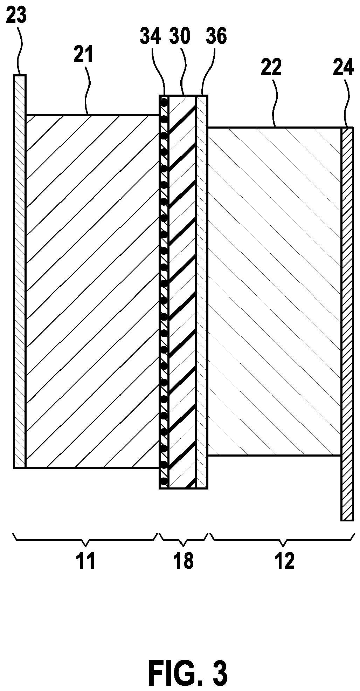

Figure 3 shows a schematic and detailed view at the electrode assembly 10 of the battery cell 2 shown in figure 1 according to a second embodiment. The separator 18 of the electrode assembly 10 contains a base layer 30, a coating 34 and an additional layer 36.

Thereat, the base layer 30 is presently made of a non-woven polyimide. The additional layer 36 is presently made of a ceramic material. The coating 34 is presently made of a polymer material, in particular of an alkane, and comprises microspheres. The microspheres have for example diameters between 5 µm and 100 nm, in particular between 10 µm and 100 nm, especially between 20 µm and 10 nm.

The separator 18 of the electrode assembly 10 is constructed such that the base layer 30 is arranged between the coating 34 and the additional layer 36. The separator 18 is arranged within the electrode assembly 10 such that the coating 34 is facing the anode composite material 21, respectively the anode 11, and that the additional layer 36 is facing the cathode composite material 22, respectively the cathode 12.

Further embodiments of the electrode assembly 10 are feasible that differ from the first embodiment shown in figure 1 and from the second embodiment shown in figure 2. In particular, the additional layer 36 made of a ceramic material is not essential and therefore may be omitted. Also, the base layer 30 can be made of a different material, in particular of polypropylene, aramid, PVdF (Polyvinylidenfluorid) or PVdF-HFP (Polyvinylidenfluorid-Hexafluorpropen).

For example, the separator 18 of the electrode assembly 10 can be constructed such that the base layer 30 is arranged between the coating 34 and the additional layer 36. The separator 18 can be arranged within the electrode assembly 10 such that the coating 34 is facing the cathode composite material 22, respectively the cathode 12, and that the additional layer 36 is facing the anode composite material 21, respectively the anode 11.

Furthermore, the coating 34 does not necessarily need to comprise microspheres. Instead of using microspheres, the polymer material of the coating 34 is initially mixed with an extractable material, e.g. dibutyl phthalate (DBP). Then, the polymer material with said extractable material is applied to the base layer 30. Afterwards, the extractable material is dissolved with a solvent, e.g. n-Hexane. When the extractable material is dissolved, pores are created in the coating 34 that are required for transport of lithium ions. Hence, the coating 34 is ion conductive.

The polymer material of the coating 34 is for example ethylene vinyl acetate, copolymers or a copolymer of ethylene and butyl acrylate.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings and those encompassed by the attached claims. The embodiments were chosen and described in order to explain the principles of the invention and its practical applications, to thereby enable others skilled in the art to utilize the invention and various embodiments with various modifications as are suited to the particular use contemplated.

## Claims

1. Battery cell (2), comprising at least one electrode assembly (10),
the electrode assembly (10) containing an anode (11) and a cathode (12) that are separated from one another by means of a separator (18),
the separator (18) containing a base layer (30)
that is coated with a coating (34) made of a polymer material,
**characterised in that**
the battery cell (2) further comprises an electrical load (42)
for discharging the battery cell (2)
that is electrically connectable to the anode (11) and to the cathode (12).

2. The battery cell (2) according to claim 1, **characterised in that**
the polymer material of the coating (34) has a melting point between 80 °C and 200 °C.

3. The battery cell (2) according to one of the preceding claims,
**characterised in that**
the polymer material of the coating (34) is made of an alkane or of a copolymer.

4. The battery cell (2) according to one of the preceding claims,
**characterised in that**
the coating (34) comprises microspheres.

5. The battery cell (2) according to one of the preceding claims,
**characterised in that**
the coating (34) comprises a binder.

6. The battery cell (2) according to one of the preceding claims,
**characterised in that**
the separator (18) contains an additional layer (36) made of a ceramic material.

7. The battery cell (2) according to one of the preceding claims,
**characterised in that**
the cathode (12) contains an additional layer (36) made of a ceramic material.

8. The battery cell (2) according to one of claims 6 to 7, **characterised in that**
the coating (34) is arranged between the base layer (30) and the additional layer (36).

9. The battery cell (2) according to one of claims 6 to 7, **characterised in that**
the base layer (30) is arranged between the additional layer (36) and the coating (34).

10. The battery cell (2) according to one of the preceding claims,
**characterised in that**
the coating (34) is facing the cathode (12).

11. The battery cell (2) according to one of claims 1 to 9, **characterised in that**
the coating (34) is facing the anode (11).

12. Method for operating a battery cell (2) according to one of the preceding claims, whereat
after detection of an error condition,
the electrical load (42) is electrically connected to the anode (11) and to the cathode (12) such that a discharging current is flowing through the battery cell (2), whereby the coating (34) is melting.

13. Usage of a battery cell (2) according to one of claims 1 to 11 and/or usage of the method according to claim 12,
in an electric vehicle (EV), in a hybrid electric vehicle (HEV), in a plug-in hybrid vehicle (PHEV), in a stationary battery or in a battery in a marine application.
